# EUROPEAN PATENT SPECIFICATION

(11) **EP 3 219 066 B1**
(45) Date of publication and mention of the grant of the patent: **28.08.2019**
(21) Application number: 14805385.3
(22) Date of filing: 12.11.2014
(51) Int. Cl.: H04L 29/06, H04W 12/06, H04W 12/08

(54) **RADIO DEVICE HARDWARE SECURITY SYSTEM FOR WIRELESS SPECTRUM USAGE**
HARDWARESICHERHEITSSYSTEM EINER FUNKVORRICHTUNG ZUR DRAHTLOSSPEKTRUMSNUTZUNG
SYSTÈME DE SÉCURITÉ MATÉRIEL POUR DISPOSITIF RADIO POUR UTILISATION EN SPECTRE SANS FIL

(43) Date of publication of application: 20.09.2017
(73) Proprietor: Telefonaktiebolaget LM Ericsson (publ), 164 83 Stockholm (SE)
(72) Inventor: HESSLER, Martin, SE-587 58 Linköping (SE); FRENGER, Pål, SE-583 34 Linköping (SE); ERIKSSON, Erik, SE-585 93 Linköping (SE); RUNE, Göran, SE-582 52 Linköping (SE)
(74) Representative: Zacco Sweden AB
(86) International application number: PCT/SE2014/051344
(87) International publication number: WO 2016/076774

(56) References cited:
- WO-A1-2014/036021
- US-A1- 2013 185 552
- US-A1- 2013 300 941

## Description

### TECHNICAL FIELD

Particular embodiments relate generally to wireless communications and more particularly to radio device hardware security systems for wireless spectrum usage.

### BACKGROUND

In wireless radio technology, an important resource is wireless spectrum. Wireless spectrum is both a resource and a global issue simply because different regions of the world use different frequency bands for different purposes. Often in each country, different frequency bands are sold in so-called "spectrum auctions" meaning that only the bidder that pays the highest amount of money can acquire that wireless spectrum. This does not, however, mean that the highest bidder will make full use of this wireless spectrum. As more and more of everyday life is dependent upon the availability of high capacity wireless technology, available wireless spectrum is becoming scarce. As a result, businesses are not able to afford acquiring the necessary wireless spectrum. Spectrum can in these scenarios be allowed to be used by third party, but in some cases needs to be tightly controlled. This can be because of purely economic reasons, but also from regulatory and safely reasons. For example in the future the spectrum for public safety, such as police and fire departments could be used for commercial purposes almost always. But when the spectrum is needed the public safety department must be prioritized above all other traffic. This implies that some trusted party needs to be responsible for the correct use of the spectrum. This can be, for example, an operator, but typically it is not sufficient that a small party, like a store owner or some individual promises to follow the rules. The security risk is not only that this third party would do something bad willingly but can simply be that this third party does not have sufficient security or competence, which implies that some "hacker" or similar person or entity could change the behavior of the wireless access nodes, which could in the worst scenario lead to death if, for example, the public safety wireless network is compromised.

In many of today's devices, the behavior of the devices are controlled by software executed on the device hardware. This implies that some particular aspects of the behavior are changeable if the device software is altered by the owner or some other person with access to the device, resulting in a potential security risk for a spectrum owner or controller granting access to its controlled wireless spectrum.

US2013/185552 A1 relates to a method for authenticating a device. The method comprises a radio device transmitting an access request and an encryption key to a network component. The network component then requests a current information and/or an identification number associated with the device. The network component considers the device authenticated if the current information of the device matches a known version of the current information and the identification number matches a known version of the identification number.

US2013/300941 A1 relates to enablement employable in TV white spaces, TVWS, wherein a master TVWS node acting as an intermediary between a slave WS device and a WS data base.

WO2014/036021 A1 relates to a secure device enrollment process. The process includes downloading an application package to a mobile device from an application store, wherein the application package comprises an application used for accessing a service via the mobile device.

### SUMMARY

The present invention is directed to subject-matter as disclosed by the appended claims.

According to some embodiments, a radio device includes one or more processors and memory. The memory contains instructions executable by the one or more processors. The radio device is operable to communicate a request to a first node to use wireless spectrum controlled by the first node and to, in response to communicating the request, receive from a network node a radio device request message. The radio device is operable to calculate a checksum of software installed in the radio device and to communicate a radio device checksum message to the network node based on the calculation of the checksum of software installed in the radio device. The radio device is also operable to receive a validation response from the first node indicating that the radio device may use the wireless spectrum controlled by the first node based on validation of the radio device through the radio device checksum message.

The first node may be the network node. The radio device may be a mobile user device or a radio network node. The validation response received from the first node may identify spectrum authorized for use by the radio device. The validation response may validate software and hardware of the radio device

According to some embodiments, a network node for validating spectrum usage may comprise a memory storing instructions and one or more processors in communication with the memory. The one or more processors may be operable to execute the instructions to cause the one or more processors to receive a request from a radio device to use wireless spectrum controlled by the network node and to communicate a radio device request message to the radio device. The radio device request message may be based at least in part upon a radio device key associated with the radio device. The one or more processors may also be operable to receive from the radio device a radio device checksum message and to communicate to the radio device a validation response indicating that the radio device may use the wireless spectrum controlled by the network node based on validation of the radio device through the radio device checksum message.

According to some embodiments, a network node for validating spectrum usage comprises a memory storing instructions and one or more processors in communication with the memory. The one or more processors may be operable to execute the instructions to cause the one or more processors to receive from a spectrum node a request for validation information for a radio device for validating the radio device to use wireless spectrum controlled by the spectrum node and to communicate to the spectrum node a radio device request message for communication to the radio device. The radio device request message may be based at least in part upon a radio device key associated with the radio device. The one or more processors may be operable to receive from the spectrum node a radio device checksum message received from the radio device, compare the radio device checksum message to a radio device reference checksum to validate the radio device and communicate to the spectrum node a validation message validating the radio device if the radio device reference checksum matches the radio device checksum message.

### BRIEF DESCRIPTION OF THE DRAWINGS

For a more complete understanding of the present invention and its features and advantages, reference is now made to the following description, taken in conjunction with the accompanying drawings, in which:
FIGURE 1 is a block diagram illustrating an example of a network;
FIGURE 2 is a flow chart illustrating example embodiments of spectrum validation;
FIGURE 3 is a flow chart illustrating example embodiments of radio device validation by a radio network node;
FIGURE 4 is a flow chart illustrating example embodiments of radio device validation by a radio network node and a spectrum node;
FIGURE 5 is a flow chart illustrating example embodiments of radio device validation by a spectrum node working with a radio network node;
FIGURE 6 is a flowchart illustrating an example embodiment of a radio network node;
FIGURE 7 is a flowchart illustrating an example embodiment of a spectrum node;
FIGURE 8 is a flowchart illustrating an example embodiment of a radio device;
FIGURE 9 is a block diagram illustrating embodiments of a radio network node;
FIGURE 10 is a block diagram illustrating embodiments of a mobile user device; and
FIGURE 11 is a block diagram illustrating embodiments of a core network node.

### DETAILED DESCRIPTION

An equipment vendor may manufacture a radio device and build into the radio device certain security functionality (including, e.g., encryption and decryption keys). This security functionality allows a radio network node, such as an equipment vendor node operated by an equipment vendor or other entity such as a service provider, to validate the radio device, indicating that the radio device is authorized to use certain services provided by the radio network node. However, in certain instances, the radio device may request to use services that are not provided by the radio network node. For example, radio device may request to use wireless spectrum that may be controlled and/or owned by a certain spectrum owner and controlled by a radio network node that is a spectrum node that may be owned and/or operated by the spectrum owner. Allowing unauthorized third parties to use the wireless spectrum may pose a security risk for the spectrum owner. In certain embodiments, however, the spectrum node can leverage the security functionality of the radio device to validate the radio device and reduce security risks. An example in which some embodiments could apply may be when a third party owns a base station and would like to connect it to one or more operator networks (e.g., for an indoor deployment). The third party would attempt to connect the base station to each of these operator networks. The operator will want to ensure that the base station is really the bases station from a particular vendor from which it claims to be and that neither the hardware or software in the base station has been tampered with. Consequently the operator may contact the base station vendor to validate the base station. Particular embodiments provide a technical solution for establishing trust between these different parties.

Generally, in the manufacturing of a radio device, the device may be equipped with a device specific encryption and software validation functionality. The radio device is further equipped with a fixed or exchangeable identification function, enabled by a card reader, for example, in a similar fashion as is done for SIM cards and TV cards. The identification function may be used to identify the radio device and the encryption function may be used to secure the software running on the radio device while maintaining the ability to remotely do software upgrades by enabling the manufacturer (e.g., the equipment vendor) to send an encrypted software package readable only by the specific radio device. For example, in some embodiments, the software may only be stored in encrypted form on the radio device hardware. Further, the software encryption function in conjunction with the validation function makes it, in some embodiments, impossible to exchange the software running on the hardware platform, without compromising the encryption function for both the hardware and the identity card.

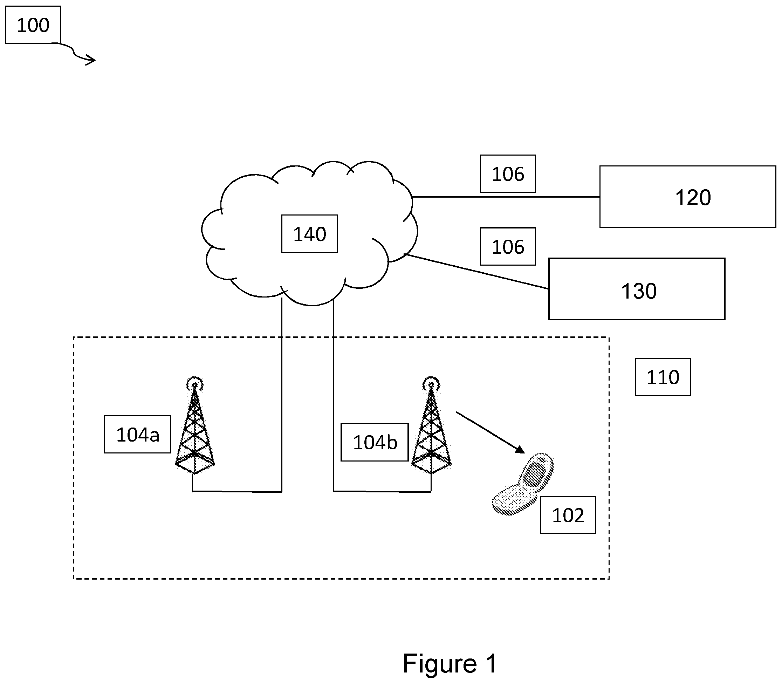

FIGURE 1 is a block diagram illustrating an example of a network 100 that includes one or more radio devices 110 and a plurality of core network nodes. Radio devices 110 include radio network nodes 104 and mobile user device 102. The core network nodes include radio network node 120 and spectrum node 130. In some embodiments radio network node 120 may be an equipment vendor node or a node operable by a service provider. In the example, mobile user device 102 communicates with radio network node 104 over a wireless interface (depicted as link 106). For example, mobile user device 102 transmits wireless signals to radio network node 104b and/or receives wireless signals from radio network node 104b. The wireless signals contain voice traffic, data traffic, control signals, and/or any other suitable information.

A radio network node 104 refers to any suitable node of a radio access network/base station system. Examples include a radio access node (such as a base station or eNodeB) and a radio access controller (such as a base station controller or other node in the radio network that manages radio access nodes). Radio network node 104 interfaces (directly or indirectly) with radio network nodes 120 and/or spectrum nodes 130. For example, radio network node 104 interfaces with radio network node 120 and/or spectrum node 130 via an interconnecting network 140. Interconnecting network 140 refers to any interconnecting system capable of transmitting audio, video, signals, data, messages, or any combination of the preceding. Interconnecting network 140 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

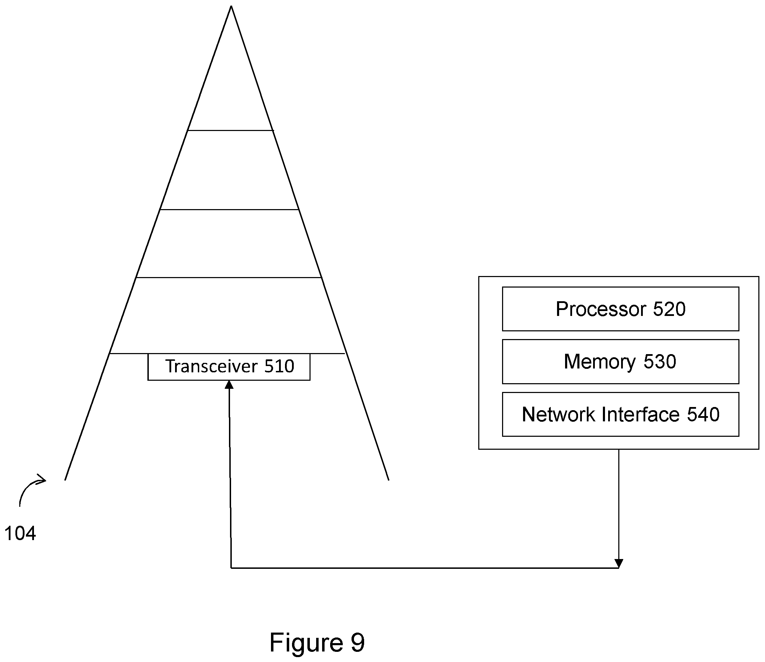

Radio network node 120 and/or spectrum node 130 manage the establishment of communication sessions and various other functionality for radio devices 110. Mobile user device 102 exchanges certain signals with vendor node 120 and/or spectrum node 130 using the non-access stratum layer. In non-access stratum (NAS) signaling, signals between mobile user device 102 and vendor node 120 and/or spectrum node 130 pass transparently through radio network nodes 104. Examples of radio network node 120, mobile user device 102, and core network nodes such as vendor node 120 and spectrum node 130 are described with respect to FIGURES 9, 10, and 11, respectively. In certain embodiments, radio network node 120 and spectrum node 130 may be a part of the same core network node.

In certain embodiments, the components of network 100 may be configured to communicate over links 106. Links 106 allow for wireless communication between two or more components of network 100. Communication over links 106 may include requests, responses, and/or any other information to and/or from any suitable component of network 100.

It should be noted that although the present disclosure may discuss one or two antenna examples, this disclosure is also applicable to networks involving three or more antennas.

Some embodiments of the disclosure may provide one or more technical advantages. For example, certain embodiments enable the deployment of radio devices in protected spectrum, thereby increasing efficient use of wireless spectrum. For example, radio devices that may not have previously been allowed to use certain protected wireless spectrum (e.g., spectrum owned by a particular spectrum owner or priority of use of the spectrum is for public safety) may now be able to use such protected wireless spectrum. Some embodiments may increase the flexibility of wireless deployment. For example, currently to operate in protected spectrum (e.g., at a stadium), an equipment vendor may need to install WiFi routers or base stations in the stadium to allow for wireless connectivity for customers. Similarly, 3GPP technology is currently only deployed where operators can make a profit or is forced to deploy due to regulatory forces. Certain embodiments reduce this issue by allowing spectrum owners to securely grant access to protected wireless spectrum. According to some embodiments, security breaches will be reduced due to radio device validation reducing the amount of resources wasted in handling a security breach.

Some embodiments may benefit from some, none, or all of these advantages. Other technical advantages may be readily ascertained by one of ordinary skill in the art.

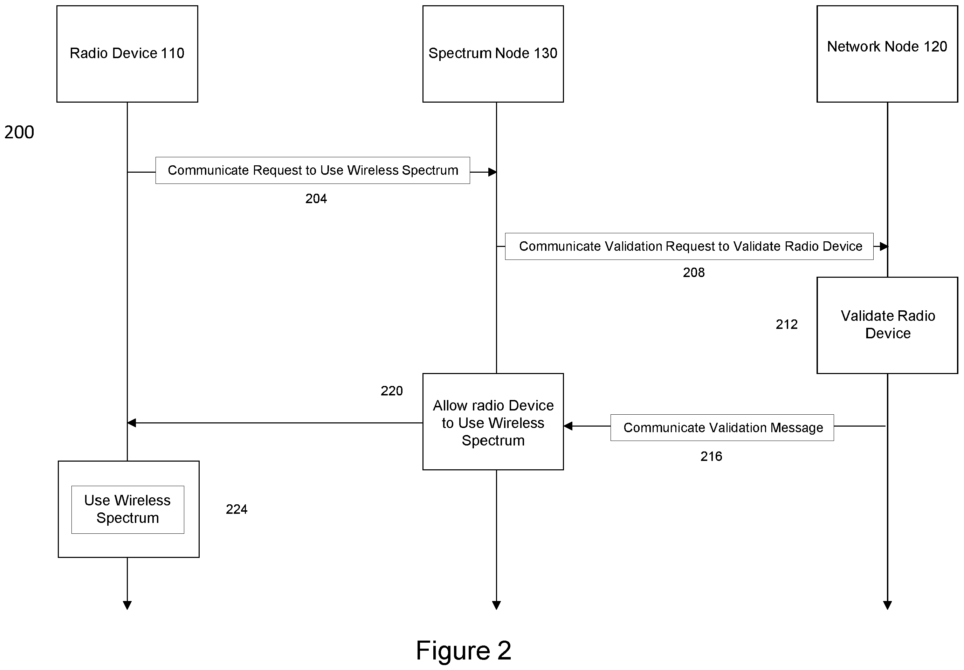

FIGURE 2 is a flow chart illustrating example embodiments of spectrum validation. Example method 200 is an example of spectrum validation that may be performed by the systems described in FIGURES 1, 9, 10, or 11. Example method 200 may be performed periodically, when radio device 110 registers after entering a particular wireless service area, when radio device 110 requests use of wireless spectrum and/or at any other suitable time. Example method 200 may begin at step 204, where radio device 110 may intend to use spectrum controlled by spectrum node 130. Radio device 110 may seek permission to use wireless spectrum controlled by spectrum node 130 by communicating a request to use wireless spectrum to spectrum node 130. For example, radio device 110 may communicate an electronic message over links 106 via interconnecting network 140 requesting to use wireless spectrum controlled by spectrum node 130. In some embodiments, radio device 110 may be mobile user device 102. According to certain embodiments, radio device 110 may be radio network node 104. In some embodiments, radio device 110 may be a mobile user device 102 and at step 204 a registration request may be communicated to spectrum node 130 by mobile user device 102. According to certain embodiments, radio device 110 may be a radio network node 104 and at step 204 a setup request may be communicated by the radio network node 104.

At step 208, in response, spectrum node 130 may communicate a validation request, to radio network node 120, to validate radio device 110. For example, spectrum node 130 may communicate an electronic message over links 106 via interconnecting network 140. Example method 200 may then proceed to step 212.

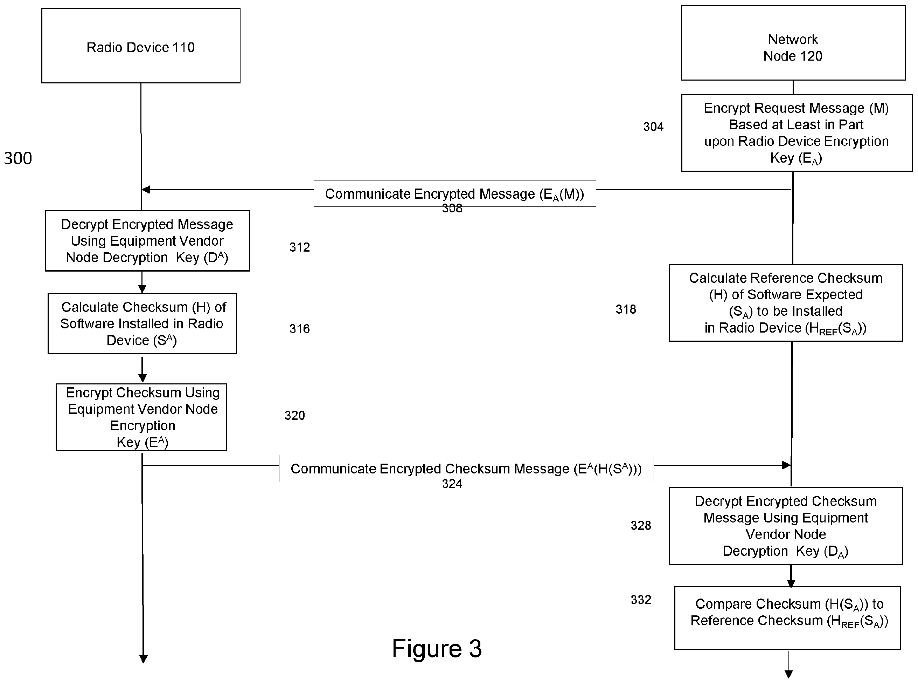

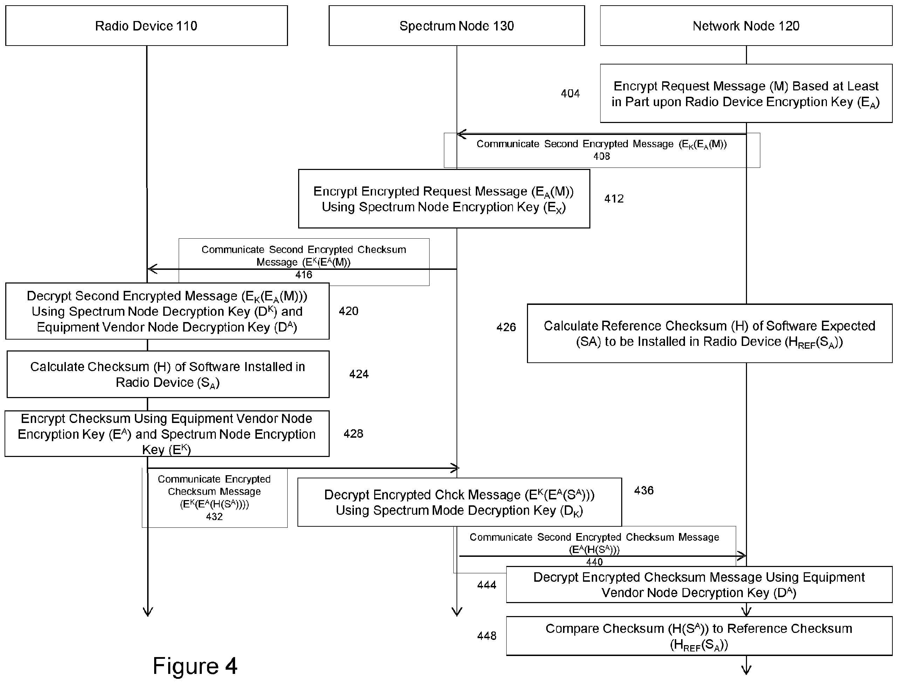

At step 212, radio network node 120 may validate radio device 110. Example methods that may be used to validate radio device 110 are further discussed below in the discussion accompanying FIGURES 3 and 4. Once radio network node 120 attempts to validate radio device 110, radio network node 120 may, at step 216, communicate the result of the validation to spectrum node 130. For example, radio network node 120 may communicate an acknowledgement that radio device 110 is validated or a negative acknowledgement that radio device 110 was not validated. Radio network node 120 may communicate the result of the validation in an electronic message over links 106 via interconnecting network 140. After receiving the validation message, spectrum node 130 may, at step 220, allow radio device 110 to use the wireless spectrum if the validation message acknowledges that radio device 110 has been validated and the example method may proceed to step 224. This may include communicating to radio device 110 a validation response indicating that the radio device may use the wireless spectrum controlled by spectrum node 130. In some embodiments, such a validation response may identify the spectrum authorized for use by the radio device. If radio device 110 has not been validated, then the example method may end. At step 224, radio device 110 has been validated and may use wireless spectrum controlled by spectrum node 130.

In some embodiments radio device 110 may be an eNodeB, and spectrum request 204 may be part of an S1 request sent to a mobility management entity (MME). The MME may translate the spectrum request to a validation request communicated to a radio network node 120. The outcome in the spectrum validation request may be included in an S1 setup response informing the eNodeB about spectrum that is authorized for usage. As discussed above, in some embodiments spectrum node 130 and network node 120 may be part of the same node. In such cases, the messages illustrated as communicated between spectrum node 130 and network node 120 may not occur.

FIGURE 3 is a flow chart illustrating example embodiments of radio device validation by a radio network node. Example method 300 is an example of radio device validation that may be performed by the systems described in FIGURES 1, 9, 10, or 11. In certain embodiments, example method 300 may be performed as a part of step 212 in example method 200. In general, example method 300 may be a combination or one or more software validation routines that enable an equipment vendor, manufacturer, or other entity such as a service provider to validate a radio device 110 remotely. Such validation may validate hardware and/or software of the radio device. Example method 300 may be used for software upgrades, periodic integrity checks, or requested integrity checks. Using example method 300, a radio network node 120, for example, may be able to validate radio device 110 or determine if radio device 110 has been tampered with. As one example, a radio network node 120 may validate radio device 110 by using a checksum for software such as MD5, SHA1, CRC, or any other suitable hashing function.

More specifically, the example method may begin at step 304 where radio network node 120 may encrypt a request message (M) based at least in part upon a radio device encryption key (E_{A}) resulting in an encrypted message (E_{A}(M)). For example, E_{A} may be the encryption key in radio network node 120 for a particular radio device 110 for sending messages to the particular radio device 110. Next, at step 308, radio network node 120 may communicate encrypted message (E_{A}(M)) to radio device 110. For example, radio network node 120 may communicate encrypted message (E_{A}(M)) over links 106 via interconnecting network 140. At step 312, after receiving encrypted message (E_{A}(M)), radio device 110 may decrypt encrypted message (E_{A}(M)) using a radio network node decryption key (D^{A}). For example, in some embodiments, the radio network node decryption key (D^{A}) is a decryption key specific to the particular radio device 110 and only the particular radio device 110 may have access to the key. The radio network node decryption key (D^{A}) may be associated with a particular radio network node 120. Thus, only the radio network node 120 may send messages to the particular radio device 110 and the request messages are validated as coming from the particular radio network node 120. In certain embodiments, the radio network node decryption key (D^{A}) may be distributed in radio device 110 hardware.

Next, at step 316, in response to receiving the request message, radio device 110 may calculate a checksum (H) of relevant software (S^{A}) running on radio device 110 for the operation of spectrum usage by radio device 110. The checksum may be calculated using MD5, SHA1, CRC, or any other suitable hash function. After calculating checksum (H(S^{A})), in step 320, radio device 110 may encrypt the checksum using a radio network node encryption key (E^{A}) resulting in an encrypted checksum message (E^{A}(H(S^{A}))). According to some embodiments, radio network node encryption key (E^{A}) is the encryption key in radio device 110 for sending messages to a particular radio network node 120. This encryption key can be, for example, distributed in the hardware of radio device 110. Next, at step 324, radio device 110 may communicate the encrypted checksum message (E^{A}(H(S^{A}))) to radio network node 120. For example, radio device 110 may communicate this message using links 106 via interconnecting network 140. The example method may then proceed to step 328.

At step 328, radio network node 120 may decrypt the encrypted checksum message (E^{A}(H(S^{A}))) using radio network node decryption key (D_{A}). In some embodiments, radio network node decryption key (D_{A}) is a decryption key specific to radio device 110 stored and/or accessed by only radio network node 120. Therefore, messages received from the particular radio device 110 are validated. Prior to, or concurrent with, step 332, step 318 may be performed by radio network node 120. At step 318, radio network node 120 may calculate a reference checksum (H_{REF}) of software that is expected (S_{A}) to be installed in radio device 110 (H_{REF}(S_{A})). At step 332, radio network node 120 may then compare the checksum received from radio device 110 (H(S^{A})) to the reference checksum (H_{REF}(S_{A})). If the two checksums match, then radio device 110 may be validated. Otherwise, validation of radio device 110 may fail.

FIGURE 4 is a flow chart illustrating example embodiments of radio device validation by a radio network node and a spectrum node. Example method 400 is an example of radio device validation that may be performed by the systems described in FIGURES 1, 9, 10, or 11. In general, a spectrum owner or controller may want to identify a specific radio device 110 that is using or requesting the use of wireless spectrum associated with spectrum node 130. Spectrum node 130 may have a specific identity "K" to identify a particular radio device 110 for spectrum usage. For example, spectrum node identity "K" could be connected to a cell identity, node name, an IP address, or any other suitable identity paired with security functions. In this example method, spectrum node 130 can validate that the spectrum node identity "K" is paired with a valid radio device 110.

More specifically, the example method may begin at step 404 where radio network node 120 may encrypt a request message (M) based at least in part upon a radio device encryption key (E_{A}) resulting in an encrypted message (E_{A}(M)). For example, E_{A} may be the encryption key in radio network node 120 for a particular radio device 110 for sending messages to the particular radio device 110. Next, at step 408, radio network node 120 may communicate encrypted message (E_{A}(M)) to spectrum node 130. For example, radio network node 120 may communicate encrypted message (E_{A}(M)) over links 106 via interconnecting network 140.

At step 412, after receiving encrypted message (E_{A}(M)), spectrum node 130 may further encrypt encrypted message (E_{A}(M)) using spectrum node encryption key (E_{K}). In certain embodiments, E_{K} is an encryption key in spectrum node 130 that is associated with identity K for sending messages to radio device 110 with identity K. Next, at step 416, spectrum node 130 may communicate the resulting second encrypted message (E_{K}(E_{A}(M))). For example, spectrum node 130 may communicate second encrypted message (E_{K}(E_{A}(M))) over links 106 via interconnecting network 140.

After receiving second encrypted message (E_{K}(E_{A}(M))), radio device 110 may then decrypt, at step 420, second encrypted message (E_{K}(E_{A}(M))) using spectrum node decryption key (D^{K}). Spectrum node decryption key (D^{K}) is the decryption key specific to identity K in the particular radio device 110. That is, only the radio device 110 with identity K has access to this key. In certain embodiments, spectrum node decryption key (D^{K}) may be distributed in an identification card for radio device 110. This decryption may result in (E_{A}(M)) and radio device 110 may further decrypt encrypted message (E_{A}(M)) using a radio network node decryption key (D^{A}). For example, in some embodiments, the radio network node decryption key (D^{A}) is a decryption key specific to the particular radio device 110 and only the particular radio device 110 may have access to the key. The radio network node decryption key (D^{A}) may be associated with a particular radio network node 120. Thus, only the radio network node 120 may send messages to the particular radio device 110 and the request messages are validated as coming from the particular radio network node 120. In certain embodiments, the radio network node decryption key (D^{A}) may be distributed in radio device 110 hardware.

Next, at step 424, in response to receiving the request message, radio device 110 may calculate a checksum (H) of relevant software (S^{A}) running on radio device 110 for the operation of spectrum usage by radio device 110. The checksum may be calculated using MD5, SHA1, CRC, or any other suitable hash function. After calculating checksum (H(S^{A})), in step 428, radio device 110 may encrypt the checksum using a radio network node encryption key (E^{A}) resulting in an encrypted checksum message (E^{A}(H(S^{A}))). According to some embodiments, radio network node encryption key (E^{A}) is the encryption key in radio device 110 for sending messages to a particular radio network node 120. This encryption key can be, for example, distributed in the hardware of radio device 110. Radio device 110 may then further encrypt encrypted checksum message (E^{A}(H(S^{A}))) using spectrum node encryption key (E^{K}) resulting in a further encrypted checksum message (E^{K}(E^{A}(H(S^{A})))). In certain embodiments, spectrum node encryption key (E^{K}) is an encryption key in radio device 110 associated with identity K for sending messages to the particular spectrum node 130. Spectrum node encryption key (E^{K}) may, for example, be distributed as part of an identification card for radio device 110.

Next, at step 432, radio device 110 may communicate the encrypted checksum message (E^{K}(E^{A}(H(S^{A})))) to spectrum node 130. For example, radio device 110 may communicate this message using links 106 via interconnecting network 140. The example method may then proceed to step 436. At step 436, spectrum node 130 may decrypt the encrypted checksum message(E^{K}(E^{A}(H(S^{A})))) using spectrum node decryption key (D_{K}) resulting in second encrypted checksum message (E^{A}(H(S^{A}))). In certain embodiments, spectrum node decryption key (D_{K}) is a decryption key specific to identity K in spectrum node 130. That is, only the particular spectrum node 130 has access to this decryption key. Thus, only the radio device 110 with identity K has the correct encryption key and the messages are validated that they come from the radio device 110 with identity K. Spectrum node 130 may then, at step 440 communicate the second encrypted checksum message (E^{A}(H(S^{A}))) to radio network node 120. For example, spectrum node 130 may communicate this message using links 106 via interconnecting network 140. The example method may then proceed to step 440.

At step 440, radio network node 120 may decrypt the second encrypted checksum message (E^{A}(H(S^{A}))) using radio network node decryption key In some embodiments, radio network node decryption key (D_{A}) is a decryption key specific to radio device 110 stored and/or accessed by only radio network node 120. Therefore, messages received from the particular radio device 110 are validated. Prior to, or concurrent with, step 448, step 426 may be performed by radio network node 120. At step 426, radio network node 120 may calculate a reference checksum (H_{REF}) of software that is expected (S_{A}) to be installed in radio device 110 (H_{REF}(S_{A})). At step 448, radio network node 120 may then compare the checksum received from radio device 110 (H(S^{A})) to the reference checksum (H_{REF}(S_{A})). If the two checksums match, then radio device 110 may be validated. Otherwise, validation of radio device 110 may fail.

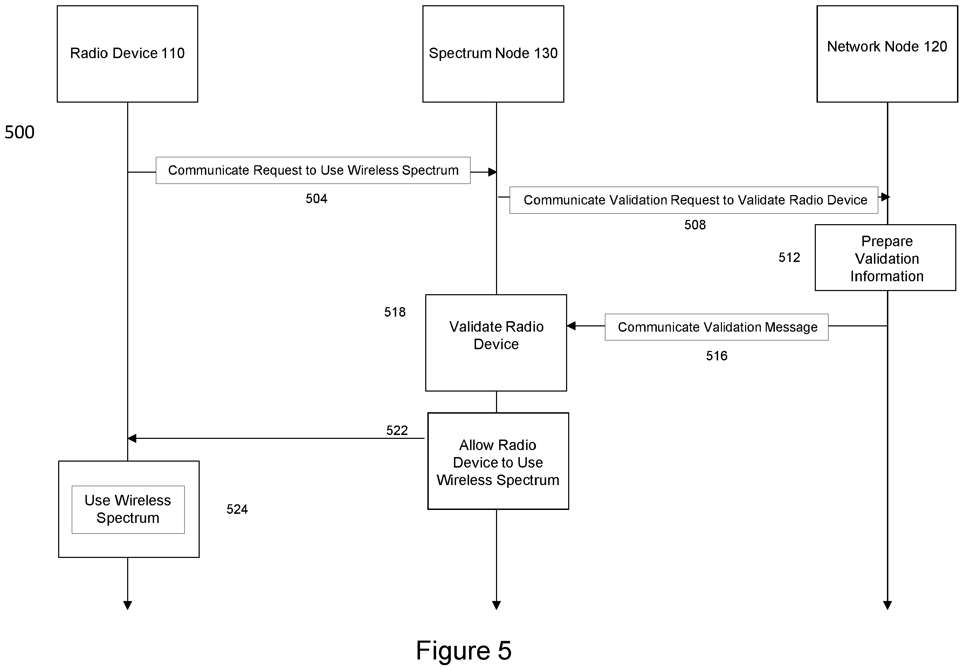

FIGURE 5 is a flow chart illustrating additional example embodiments of spectrum validation. Example method 500 is an example of spectrum validation that may be performed by the systems described in FIGURES 1, 9, 10, or 11. Example method 500 may be performed periodically, when radio device 110 registers after entering a particular wireless service area, when radio device 110 requests use of wireless spectrum and/or at any other suitable time. Example method 500 may begin at step 504, where radio device 110 may intend to use spectrum controlled by spectrum node 130. Radio device 110 may seek permission to use wireless spectrum controlled by spectrum node 130 by communicating a request to use wireless spectrum to spectrum node 130. For example, radio device 110 may communicate an electronic message over links 106 via interconnecting network 140 requesting to use wireless spectrum controlled by spectrum node 130. In some embodiments, radio device 110 may be a mobile user device 102, and at step 504 a registration request may be communicated to spectrum node 130 by mobile user device 102. According to certain embodiments, radio device 110 may be a radio network node 104, and at step 504 a setup request may be communicated by the radio network node 104.

At step 508, in response, spectrum node 130 may communicate a validation request, to radio network node 120, for validation information to validate radio device 110. For example, spectrum node 130 may communicate an electronic message over links 106 via interconnecting network 140. Example method 500 may then proceed to step 512.

At step 512, network node 120 may prepare validation information to enable spectrum node 130 to validate radio device 110. The validation information may include information that spectrum node 130 should send to radio device 110 so that radio device can calculate a checksum for validation and information that spectrum node 130 will need to validate the radio device, such as the information it needs to calculate a reference checksum for validation or the calculated reference checksum that the spectrum node 130 could use for validation. At step 516, the validation information may be communicated to spectrum node 130.

At step 518, spectrum node 130 may validate radio device 110. This may include a process similar to example method 300 of FIGURE 3 such that spectrum node 130 performs the steps 304, 308, 318, 328, and 332 that are performed by network node 120 in that illustration. For example, spectrum node 130 may encrypt a request message (M) based at least in part upon a radio device encryption key (E_{A}) resulting in an encrypted message (E_{A}(M)). E_{A} may be the encryption key for a particular radio device 110 for sending messages to the particular radio device 110. Spectrum node may communicate encrypted message (E_{A}(M)) to radio device 110. Spectrum node may also calculate a reference checksum (H_{REF}) of software that is expected (S_{A}) to be installed in radio device 110 (H_{REF}(S_{A})) using the validation information received from network node 120 at step 516. Spectrum node may also decrypt an encrypted checksum message (E^{A}(H(S^{A}))) received from radio device 110 using radio network node decryption key (D_{A}) and compare the checksum received from radio device 110 (H(S^{A})) to the reference checksum (H_{REF}(S_{A})). If the two checksums match, then radio device 110 may be validated. Otherwise, validation of radio device 110 may fail.

Once spectrum node 130 validates radio device 110, spectrum node 130 may, at step 522, allow radio device 110 to use the wireless spectrum. This may include communicating to radio device 110 a validation response indicating that the radio device may use the wireless spectrum controlled by spectrum node 130. In some embodiments, such a validation response may identify the spectrum authorized for use by the radio device. If spectrum node 130 is unable to validate radio device 110, then the example method may end. At step 524, radio device 110 has been validated and may use wireless spectrum controlled by spectrum node 130.

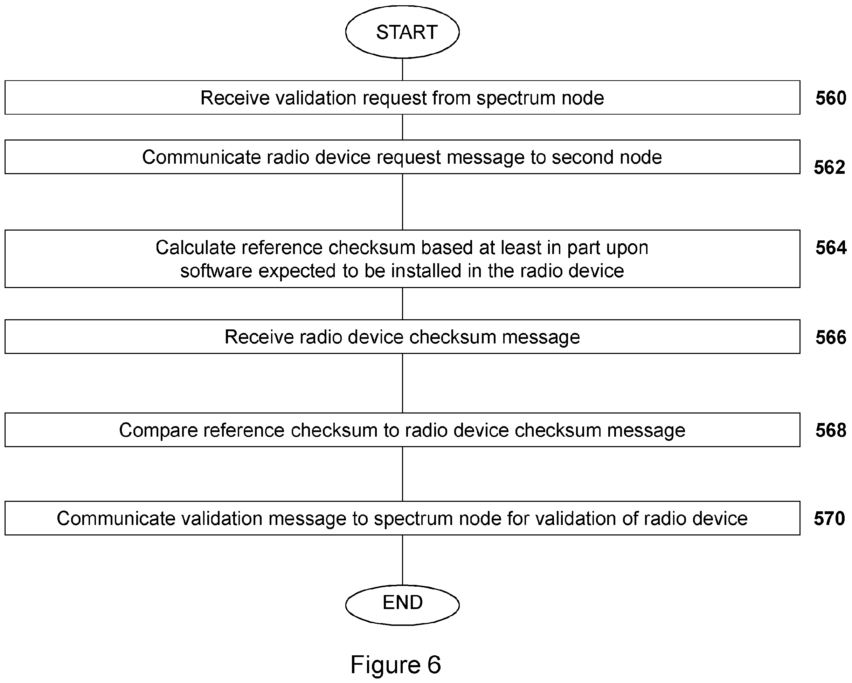

FIGURE 6 is a flowchart illustrating an example embodiment in a radio network node. The method shown begins at step 560, where a radio network node receives a validation request from a spectrum node. In some embodiments, the radio network node may be radio network node 120 and may be an equipment vendor node in some cases. At step 562 the radio network node communicates a radio device request message to a second node. The radio device request message may be based at least in part upon a radio device key associated with a radio device. In some embodiments the second node may be a spectrum node, such as spectrum node 130, or the radio device, such as radio device 110. The radio device may be a mobile user device or another radio network node. The radio device request message may also be encrypted using the radio device key.

At step 564, the radio network node calculates a reference checksum based at least in part upon software expected to be installed in the radio device. At step 566, the radio network node receives a radio device checksum message from the second node. The radio device checksum message may include a checksum of software installed in the radio device. At step 568 the radio network node compares the reference checksum to the radio device checksum message to validate the radio device. If the radio device is validated, then the radio network node communicates a validation message to the spectrum node at step 570.

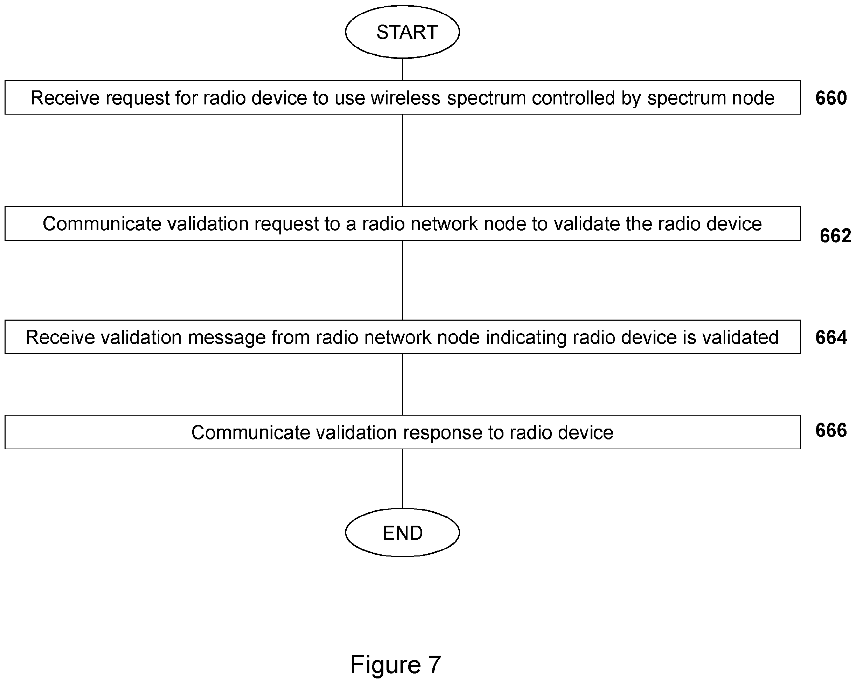

FIGURE 7 is a flowchart illustrating an example embodiment in a spectrum node. The method shown begins at step 660 where a spectrum node, such as spectrum node 130, receives a request for a radio device to use wireless spectrum controlled by the spectrum node. In some cases the radio device may be a mobile user device, and in some cases it may be a second radio network node. At step 662, in response to receiving the request, the spectrum node communicates a validation request to a radio network node to validate the radio device. In some embodiments, the spectrum node may communicate messages in the validation process, such as an encrypted radio device request message that is based at least in party upon a spectrum node encryption key associated with the spectrum node. At step 664, the spectrum node receives a validation message from the radio network node indicating that the radio device is validated, and at step 666 the spectrum node communicates a validation response to the radio device to allow the radio device to use the wireless spectrum.

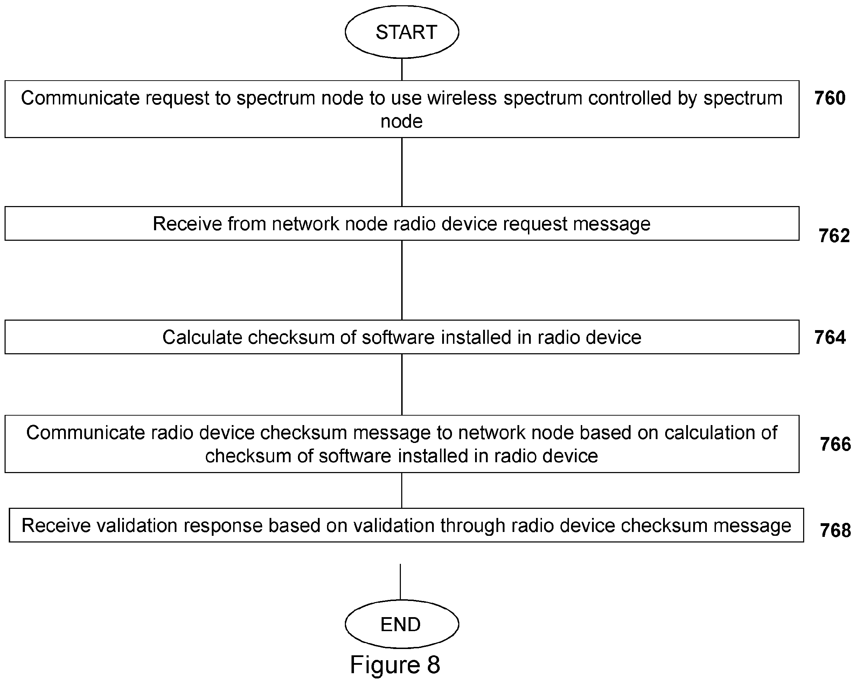

FIGURE 8 is a flowchart illustrating an example embodiment in a radio device. The method shown begins at step 760 where the radio device, such as radio device 110, communicates a request to a spectrum node, such as spectrum node 130, to use wireless spectrum controlled by the spectrum node. In some cases, the radio device may be a mobile user device, and in some cases it may be radio network node, such as radio network node 104. In response to communicating the request, the radio device receives from a network node a radio device request message at step 762. In some embodiments, this network node may be the spectrum node. At step 764, the radio device calculates a checksum of software installed in the radio device, and at step 766 the radio device communicates a radio device checksum message to the network node based on the calculation of the checksum of installed software. At step 768, the radio device receives a validation response indicating that the radio device may use the wireless spectrum based on validation of the radio device through the radio device checksum message. In some embodiments, the radio device may decrypt the radio device request message using a network node decryption key and may encrypt the radio device checksum message using a network node encryption key.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention. The methods may include more, fewer, or other steps. Additionally, steps may be performed in any suitable order.

FIGURE 9 is a block diagram illustrating embodiments of a radio network node. In the illustration, radio network node 104 is shown as a radio access node, such as an eNodeB, a node B, a base station, a wireless access point (e.g., a Wi-Fi access point), a low power node, a base transceiver station (BTS), transmission points, transmission nodes, remote RF unit (RRU), remote radio head (RRH), etc. Other radio network nodes 104, such as one or more radio network controllers, may be configured between the radio access nodes and radio network nodes 120 and/or spectrum nodes 130. These other radio network nodes 104 may include processors, memory, and interfaces similar to those described with respect to FIGURE 8, however, these other radio network nodes might not necessarily include a wireless interface, such as transceiver 510. In certain embodiments, radio network node 104 may include one or more encryption and decryption keys in hardware.

Radio access nodes are deployed throughout network 100 as a homogenous deployment, heterogeneous deployment, or mixed deployment. A homogeneous deployment generally describes a deployment made up of the same (or similar) type of radio access nodes and/or similar coverage and cell sizes and inter-site distances. A heterogeneous deployment generally describes deployments using a variety of types of radio access nodes having different cell sizes, transmit powers, capacities, and inter-site distances. For example, a heterogeneous deployment may include a plurality of low-power nodes placed throughout a macro-cell layout. Mixed deployments include a mix of homogenous portions and heterogeneous portions.

Radio network node 104 includes one or more of transceiver 510, processor 520, memory 530, and network interface 540. Transceiver 510 facilitates transmitting wireless signals to and receiving wireless signals from mobile user device 102 (e.g., via an antenna), processor 520 executes instructions to provide some or all of the functionality described above as being provided by a radio network node 104, memory 530 stores the instructions executed by processor 520, and network interface 540 communicates signals to backend network components, such as a gateway, switch, router, Internet, Public Switched Telephone Network (PSTN), other radio network nodes 104, radio network nodes 120, spectrum nodes 130, etc.

Processor 520 includes any suitable combination of hardware and software implemented in one or more modules to execute instructions and manipulate data to perform some or all of the described functions of radio network node 104. In some embodiments, processor 520 includes, for example, one or more computers, one or more central processing units (CPUs), one or more microprocessors, one or more applications, and/or other logic.

Memory 530 is generally operable to store instructions, such as a computer program, software, an application including one or more of logic, rules, algorithms, code, tables, etc. and/or other instructions capable of being executed by a processor. Examples of memory 530 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information. For example, memory 530 may include instructions that, when executed by processor 520, perform the functionality described above with respect to radio network node 104.

Memory 530 may also be able to store a hardware identifier (e.g., a MAC address) and an identity K which is an assigned unique logical identity of the device. In certain embodiments, identity K may be stored on an ID card such as a SIM card.

In some embodiments, network interface 540 is communicatively coupled to processor 520 and refers to any suitable device operable to receive input for radio network node 104, send output from radio network node 104, perform suitable processing of the input or output or both, communicate to other devices, or any combination of the preceding. Network interface 540 includes appropriate hardware (e.g., port, modem, network interface card, etc.) and software, including protocol conversion and data processing capabilities, to communicate through a network.

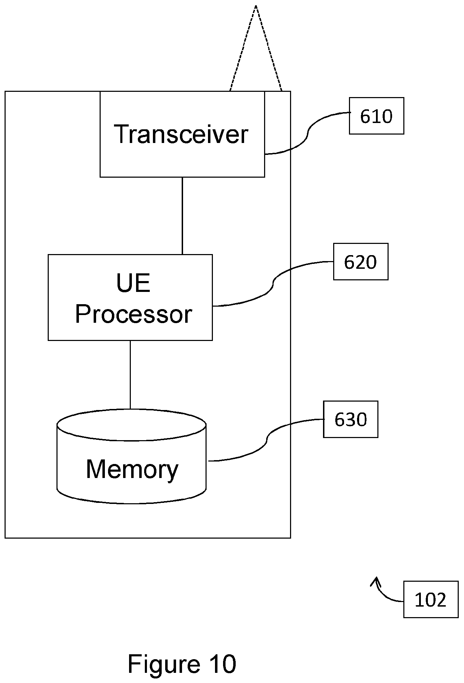

FIGURE 10 is a block diagram illustrating embodiments of a mobile user device 102. Examples of mobile user device 102 include a mobile phone, a smart phone, a PDA (Personal Digital Assistant), a portable computer (e.g., laptop, tablet), a sensor, a modem, a machine type (MTC) device / machine to machine (M2M) device, laptop embedded equipment (LEE), laptop mounted equipment (LME), USB dongles, a device-to-device capable device, or another device that can provide wireless communication. A mobile user device 102 may also be referred to as user equipment (UE), a station (STA), a mobile station (MS), a device, a wireless device, or a terminal in some embodiments. In certain embodiments, mobile user device 102 may include one or more encryption and decryption keys in hardware.

Mobile user device 102 includes transceiver 610, processor 620, and memory 630. In some embodiments, transceiver 610 facilitates transmitting wireless signals to and receiving wireless signals from radio network node 104, radio network node 120, and/or spectrum node 130 (e.g., via an antenna), processor 620 executes instructions to provide some or all of the functionality described above as being provided by mobile user device 102, and memory 630 stores the instructions executed by processor 620. For example, memory 630 may include instructions that, when executed by processor 620, perform the functionality described above with respect to mobile user device 102.

Processor 620 includes any suitable combination of hardware and software implemented in one or more modules to execute instructions and manipulate data to perform some or all of the described functions of mobile user device 102. In some embodiments, processor 620 includes, for example, one or more computers, one or more central processing units (CPUs), one or more microprocessors, one or more applications, and/or other logic.

Memory 630 is generally operable to store instructions, such as a computer program, software, an application including one or more of logic, rules, algorithms, code, tables, etc. and/or other instructions capable of being executed by a processor. Examples of memory 630 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

Memory 630 may also be able to store a hardware identifier (e.g., a MAC address) and an identity K which is an assigned unique logical identity of the device. In certain embodiments, identity K may be stored on an ID card such as a SIM card.

Other embodiments of mobile user device 102 include additional components (beyond those shown in FIGURE 10) responsible for providing certain aspects of the mobile user device's functionality, including any of the functionality described above and/or any additional functionality (including any functionality necessary to support the solution described above).

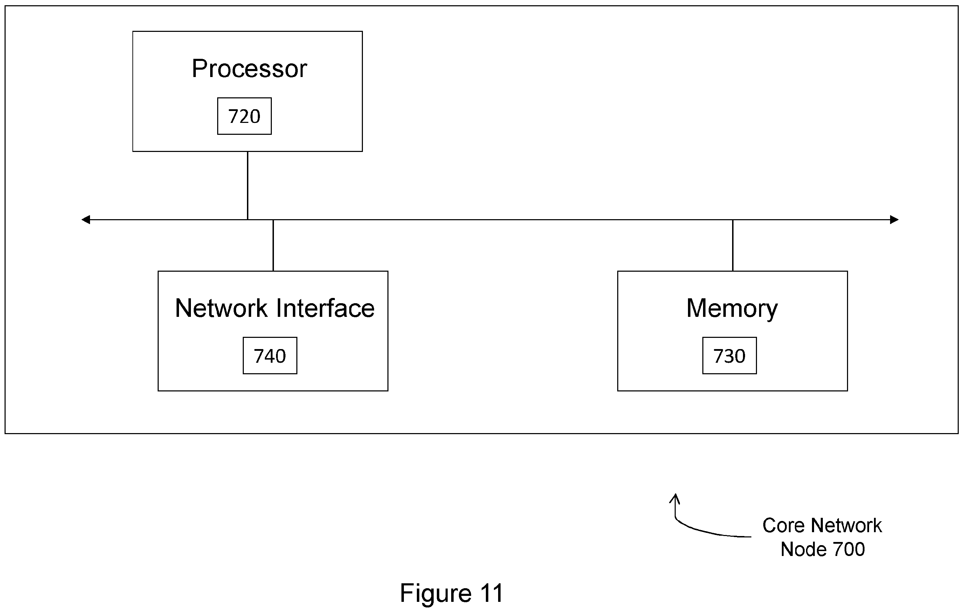

FIGURE 11 is a block diagram illustrating embodiments of a core network node. Examples of core network node 700 can include a mobile switching center (MSC), a serving GPRS support node (SGSN), a mobility management entity (MME), a radio network controller (RNC), a base station controller (BSC), and so on. Radio network node 120 and spectrum node 130 may be example core network nodes 700. Core network node 700 includes processor 720, memory 730, and network interface 740. In some embodiments, processor 720 executes instructions to provide some or all of the functionality described above as being provided by core network node 700 (e.g., functionality provided by radio network node 120 and/or spectrum node 130), memory 730 stores the instructions executed by processor 720, and network interface 740 communicates signals to an suitable node, such as a gateway, switch, router, Internet, Public Switched Telephone Network (PSTN), radio network nodes 120, other core network nodes 700, etc.

Processor 720 includes any suitable combination of hardware and software implemented in one or more modules to execute instructions and manipulate data to perform some or all of the described functions of core network node 700. In some embodiments, processor 720 includes, for example, one or more computers, one or more central processing units (CPUs), one or more microprocessors, one or more applications, and/or other logic.

Memory 730 is generally operable to store instructions, such as a computer program, software, an application including one or more of logic, rules, algorithms, code, tables, etc. and/or other instructions capable of being executed by a processor. Examples of memory 730 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 740 is communicatively coupled to processor 720 and may refer to any suitable device operable to receive input for core network node 700, send output from core network node 700, perform suitable processing of the input or output or both, communicate to other devices, or any combination of the preceding. Network interface 740 includes appropriate hardware (e.g., port, modem, network interface card, etc.) and software, including protocol conversion and data processing capabilities, to communicate through a network.

Other embodiments of core network node 700 include additional components (beyond those shown in FIGURE 11) responsible for providing certain aspects of the core network node's functionality, including any of the functionality described above and/or any additional functionality (including any functionality necessary to support the solution described above).

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the following claims.

## Claims

1. A method in a radio device (110) for validating spectrum usage comprising:
communicating (204, 504) a request to a first node to use wireless spectrum controlled by the first node;
in response to communicating the request, receiving (308, 416) from a network node a radio device request message;
calculating (316, 424) a checksum of software installed in the radio device;
communicating (324, 432) a radio device checksum message to the network node based on the calculation of the checksum of software installed in the radio device; and
receiving (220, 522) a validation response from the first node indicating that the radio device may use the wireless spectrum controlled by the first node based on validation of the radio device through the radio device checksum message.

2. The method of Claim 1, wherein the first node is the network node.

3. The method of Claim 1, wherein the validation response received from the first node identifies spectrum authorized for use by the radio device.

4. The method of Claim 1, further comprising:
decrypting (312, 420) the radio device request message using a network node decryption key; and
encrypting (320, 428) the radio device checksum message using a network node encryption key.

5. The method of Claim 1 or 4, wherein the validation response validates software and hardware of the radio device.

6. A method in a network node (120, 130) for validating spectrum usage comprising:
receiving (204, 504) a request from a radio device (110) to use wireless spectrum controlled by the network node;
communicating (308, 416) a radio device request message to the radio device, the radio device request message based at least in part upon a radio device key associated with the radio device;
receiving (324, 432) from the radio device a radio device checksum message; and
communicating (220, 522) to the radio device a validation response indicating that the radio device may use the wireless spectrum controlled by the network node based on validation of the radio device through the radio device checksum message.

7. The method of Claim 6, further comprising comparing (332, 448, 518) a radio device reference checksum to the radio device checksum message to validate the radio device.

8. The method of Claim 6, further comprising:
after receiving the request from the radio device to use wireless spectrum controlled by the network node, communicating (508) a request to a second network node (120) for validation information for the radio device;
receiving (516) from the second network node (120) validation information for the radio device, the validation information including a radio device reference checksum;
comparing (518) the radio device reference checksum to the radio device checksum message to validate the radio device.

9. The method of Claim 6, further comprising:
after receiving the request from the radio device to use wireless spectrum controlled by the network node, communicating (208) a validation request to a second network node (120) for validation of the radio device;
receiving (408) from the second network (120) node the radio device request message for communication to the radio device;
communicating (440) to the second network node (120) the radio device checksum message received from the radio device;
receiving (216) from the second network node (120) a validation message validating the radio device.

10. The method of Claim 6, further comprising:
encrypting (304, 404) the radio device request message using the radio device key; and
decrypting (328, 444) the radio device checksum message using a network node key.

11. A method in a network node (120) for validating spectrum usage comprising:
receiving (508) a request from a spectrum node (130) for validation information for a radio device for validating the radio device to use wireless spectrum controlled by the spectrum node;
preparing (512) validation information for the radio device, the validation information including a radio device reference checksum; and
communicating (516) to the spectrum node (130) the validation information for validating the radio device at the spectrum node.

12. A method in a network node (120) for validating spectrum usage comprising:
receiving (208) from a spectrum node (130) a request for validation information for a radio device for validating the radio device to use wireless spectrum controlled by the spectrum node;
communicating (308) to the radio device a radio device request message, the radio device request message based at least in part upon a radio device key associated with the radio device;
receiving (324) from the radio device a radio device checksum message;
comparing (332) the radio device checksum message to a radio device reference checksum to validate the radio device; and
communicating (216) to the spectrum node (130) a validation message validating the radio device if the radio device reference checksum matches the radio device checksum message.

13. A radio device (110) for validating spectrum usage comprising:
a memory storing instructions; and
one or more processors in communication with the memory, the one or more processors operable to execute the instructions to cause the one or more processors to perform any of methods 1-5.

14. A network node (120, 130) for validating spectrum usage comprising:
a memory storing instructions; and
one or more processors in communication with the memory, the one or more processors operable to execute the instructions to cause the one or more processors to perform any of methods 6-12.

## Patentansprüche

1. Verfahren in einer Funkvorrichtung (110) zum Validieren der Spektrumsnutzung, umfassend:
Kommunizieren (204, 504) einer Anforderung an einen ersten Knoten, zur Verwendung eines durch einen ersten Knoten gesteuerten Drahtlosspektrums;
als Reaktion auf das Kommunizieren der Anforderung, Empfangen (308, 416) einer Anforderungsnachricht einer Funkvorrichtung von einem Netzknoten;
Berechnen (316, 424) einer Prüfsumme der in der Funkvorrichtung installierten Software;
Kommunizieren (324, 432) einer Prüfsummennachricht einer Funkvorrichtung an den Netzknoten basierend auf dem Berechnen der Prüfsumme der in der Funkvorrichtung installierten Software; und
Empfangen (220, 522) einer Validierungsreaktion von dem ersten Knoten, die angibt, dass die Funkvorrichtung das durch den ersten Knoten gesteuerte Drahtlosspektrum basierend auf der Validierung der Funkvorrichtung durch die Prüfsummennachricht der Funkvorrichtung verwenden kann.

2. Verfahren nach Anspruch 1, wobei der erste Knoten der Netzknoten ist.

3. Verfahren nach Anspruch 1, wobei die vom ersten Knoten empfangene Validierungsreaktion das zur Verwendung durch die Funkvorrichtung autorisierte Spektrum identifiziert.

4. Verfahren nach Anspruch 1, ferner umfassend:
Entschlüsseln (312, 420) der Anforderungsnachricht einer Funkvorrichtung unter Verwendung eines Entschlüsselungsschlüssels für einen Netzknoten; und
Verschlüsseln (320, 428) der Prüfsummennachricht einer Funkvorrichtung unter Verwendung eines Verschlüsselungsschlüssels für einen Netzknoten.

5. Verfahren nach Anspruch 1 oder 4, wobei die Validierungsreaktion die Soft- und Hardware der Funkvorrichtung validiert.

6. Verfahren in einem Netzknoten (120, 130) zum Validieren der Spektrumsnutzung, umfassend:
Empfangen (204, 504) einer Anforderung von einer Funkvorrichtung (110) zur Verwendung eines durch den Netzknoten gesteuerten Drahtlosspektrums;
Kommunizieren (308, 416) der Anforderungsnachricht einer Funkvorrichtung an die Funkvorrichtung, wobei die Anforderungsnachricht der Funkvorrichtung zumindest teilweise auf einem der Funkvorrichtung zugeordneten Schlüssel der Funkvorrichtung basiert;
Empfangen (324, 432) der Prüfsummennachricht einer Funkvorrichtung von der Funkvorrichtung; und
Kommunizieren (220, 522) einer Validierungsreaktion an die Funkvorrichtung, die angibt, dass die Funkvorrichtung das durch den ersten Netzknoten gesteuerte Drahtlosspektrum basierend auf der Validierung der Funkvorrichtung durch die Prüfsummennachricht der Funkvorrichtung verwenden kann.

7. Verfahren nach Anspruch 6, ferner umfassend, das Vergleichen (332, 448, 518) der Prüfsumme einer Funkvorrichtung mit der Prüfsummennachricht der Funkvorrichtung zum Validieren der Funkvorrichtung.

8. Verfahren nach Anspruch 6, ferner umfassend:
nach dem Empfangen der Anforderung von der Funkvorrichtung, ein durch den Netzknoten gesteuertes Drahtlosspektrum zu verwenden, Kommunizieren (508) einer Anforderung an einen zweiten Netzknoten (120) zur Validierung von Informationen für die Funkvorrichtung;
Empfangen (516) von Validierungsinformationen für die Funkvorrichtung von dem zweiten Netzknoten (120), wobei die Validierungsinformationen eine Referenzprüfsumme der Funkvorrichtung einschließen;
Vergleichen (518) der Prüfsumme einer Funkvorrichtung mit der Prüfsummennachricht der Funkvorrichtung zum Validieren der Funkvorrichtung.

9. Verfahren nach Anspruch 6, ferner umfassend:
nach dem Empfangen der Anforderung von der Funkvorrichtung, ein durch den Netzknoten gesteuertes Drahtlosspektrum zu verwenden, Kommunizieren (208) einer Validierungsanforderung an einen zweiten Netzknoten (120) zur Validierung der Funkvorrichtung;
Empfangen (408), von dem zweiten Netzknoten (120), der Anforderungsnachricht einer Funkvorrichtung zum Kommunizieren an die Funkvorrichtung;
Kommunizieren (440), an den zweiten Netzwerkknoten (120), der von der Funkvorrichtung empfangenen Prüfsummennachricht der Funkvorrichtung;
Empfangen (216), vom zweiten Netzknoten (120), einer Validierungsnachricht zum Validieren der Funkvorrichtung.

10. Verfahren nach Anspruch 6, ferner umfassend:
Verschlüsseln (304, 404) der Anforderungsnachricht der Funkvorrichtung unter Verwendung des Funkvorrichtungsschlüssels; und
Entschlüsseln (328, 444) der Prüfsummennachricht einer Funkvorrichtung unter Verwendung eines Netzknotenschlüssels.

11. Verfahren in einem Netzknoten (120) zum Validieren der Spektrumsnutzung, umfassend:
Empfangen (508) einer Anforderung von einem Spektrumsknoten (130) für Validierungsinformationen für eine Funkvorrichtung zum Validieren der Funkvorrichtung zur Verwendung eines durch den Spektrumsknoten gesteuerten Drahtlosspektrums;
Vorbereiten (512) von Validierungsinformationen für die Funkvorrichtung, wobei die Validierungsinformationen eine Referenzprüfsumme der Funkvorrichtung einschließen; und
Kommunizieren (516) der Validierungsinformationen an den Spektrumsknoten (130) zum Validieren der Funkvorrichtung an dem Spektrumsknoten.

12. Verfahren in einem Netzknoten (120) zum Validieren der Spektrumsnutzung, umfassend:
Empfangen (208) einer Anforderung von Validierungsinformationen für eine Funkvorrichtung zum Validieren der Funkvorrichtung zur Verwendung des durch den Spektrumsknoten (130) gesteuerten Drahtlosspektrums;
Kommunizieren (308) einer Anforderungsnachricht einer Funkvorrichtung an die Funkvorrichtung, wobei die Anforderungsnachricht einer Funkvorrichtung zumindest teilweise auf einem der Funkvorrichtung zugeordneten Schlüssel einer Funkvorrichtung basiert;
Empfangen (324) einer Prüfsummennachricht der Funkvorrichtung von der Funkvorrichtung;
Vergleichen (332) der Prüfsummennachricht der Funkvorrichtung mit einer Referenzprüfsumme der Funkvorrichtung zum Validieren der Funkvorrichtung; und
Kommunizieren (216) einer Validierungsnachricht an den Spektrumsknoten (130), welche die Funkvorrichtung validiert, wenn die Referenzprüfsumme der Funkvorrichtung mit der Prüfsummennachricht der Funkvorrichtung übereinstimmt.

13. Funkvorrichtung (110) zum Validieren der Spektrumsnutzung, umfassend:
einen Speicher zum Speichern von Anweisungen; und
einen oder mehrere Prozessoren in Verbindung mit dem Speicher, wobei der eine oder die mehreren Prozessoren zum Ausführen der Anweisungen betreibbar sind, um den einen oder die mehreren Prozessoren zum Ausführen eines der Verfahren 1 bis 5 zu veranlassen.

14. Netzknoten (120, 130) zum Validieren der Spektrumsnutzung, umfassend:
einen Speicher zum Speichern von Anweisungen; und
einen oder mehrere Prozessoren in Verbindung mit dem Speicher, wobei der eine oder die mehreren Prozessoren zum Ausführen der Anweisungen betreibbar sind, um den einen oder die mehreren Prozessoren zum Ausführen eines der Verfahren 6 bis 12 zu veranlassen.

## Revendications

1. Procédé dans un dispositif radio (110) pour valider une utilisation de spectre comprenant :
la communication (204, 504) d'une demande à un premier noeud pour utiliser un spectre sans fil commandé par le premier noeud ;
en réponse à la communication de la demande, la réception (308, 416) depuis un noeud de réseau d'un message de demande de dispositif radio ;
le calcul (316, 424) d'une somme de contrôle d'un logiciel installé dans le dispositif radio ;
la communication (324, 432) d'un message de somme de contrôle de dispositif radio au noeud de réseau sur la base du calcul de la somme de contrôle du logiciel installé dans le dispositif radio ; et
la réception (220, 522) d'une réponse de validation depuis le premier noeud indiquant que le dispositif radio peut utiliser le spectre sans fil commandé par le premier noeud sur la base de la validation du dispositif radio par l'intermédiaire du message de somme de contrôle de dispositif radio.

2. Procédé selon la revendication 1, dans lequel le premier noeud est le noeud de réseau.

3. Procédé selon la revendication 1, dans lequel la réponse de validation reçue du premier noeud identifie un spectre autorisé pour utilisation par le dispositif radio.

4. Procédé selon la revendication 1, comprenant en outre :
le déchiffrement (312, 420) du message de demande de dispositif radio en utilisant une clé de déchiffrement de noeud de réseau ; et
le chiffrement (320, 428) du message de somme de contrôle de dispositif radio en utilisant une clé de chiffrement de noeud de réseau.

5. Procédé selon la revendication 1 ou 4, dans lequel la réponse de validation valide le logiciel et le matériel du dispositif radio.

6. Procédé dans un noeud de réseau (120, 130) pour valider une utilisation de spectre comprenant :
la réception (204, 504) d'une demande depuis un dispositif radio (110) pour utiliser un spectre sans fil commandé par le noeud de réseau ;
la communication (308, 416) d'un message de demande de dispositif radio au dispositif radio, le message de demande de dispositif radio basé au moins en partie sur une clé de dispositif radio associée au dispositif radio ;
la réception (324, 432) depuis le dispositif radio d'un message de somme de contrôle de dispositif radio ; et
la communication (220, 522) au dispositif radio d'une réponse de validation indiquant que le dispositif radio peut utiliser le spectre sans fil commandé par le noeud de réseau sur la base d'une validation du dispositif radio par l'intermédiaire du message de somme de contrôle de dispositif radio.

7. Procédé selon la revendication 6, comprenant en outre la comparaison (332, 448, 518) d'une somme de contrôle de référence de dispositif radio au message de somme de contrôle de dispositif radio pour valider le dispositif radio.

8. Procédé selon la revendication 6, comprenant en outre :
après réception de la demande depuis le dispositif radio pour utiliser un spectre sans fil commandé par le noeud de réseau, la communication (508) d'une demande à un deuxième noeud de réseau (120) pour des informations de validation pour le dispositif radio ;
la réception (516) depuis le deuxième noeud de réseau (120) d'informations de validation pour le dispositif radio, les informations de validation incluant une somme de contrôle de référence de dispositif radio ;
la comparaison (518) de la somme de contrôle de référence de dispositif radio au message de somme de contrôle de dispositif radio pour valider le dispositif radio.

9. Procédé selon la revendication 6, comprenant en outre :
après réception de la demande depuis le dispositif radio pour utiliser un spectre sans fil commandé par le noeud de réseau, la communication (208) d'une demande de validation à un deuxième noeud de réseau (120) pour validation du dispositif radio ;
la réception (408) depuis le deuxième noeud de réseau (120) du message de demande de dispositif radio pour communication au dispositif radio ;
la communication (440) au deuxième noeud de réseau (120) du message de somme de contrôle de dispositif radio reçu du dispositif radio ;
la réception (216) depuis le deuxième noeud de réseau (120) d'un message de validation validant le dispositif radio.

10. Procédé selon la revendication 6, comprenant en outre :
le chiffrement (304, 404) du message de demande de dispositif radio en utilisant la clé de dispositif radio ; et
le déchiffrement (328, 444) du message de somme de contrôle de dispositif radio en utilisant une clé de noeud de réseau.

11. Procédé dans un noeud de réseau (120) pour valider une utilisation de spectre comprenant :
la réception (508) d'une demande depuis un noeud de spectre (130) pour des informations de validation pour un dispositif radio pour valider le dispositif radio pour utiliser un spectre sans fil commandé par le noeud de spectre ;
la préparation (512) d'informations de validation pour le dispositif radio, les informations de validation incluant une somme de contrôle de référence de dispositif radio ; et
la communication (516) au noeud de spectre (130) des informations de validation pour valider le dispositif radio au niveau du noeud de spectre.

12. Procédé dans un noeud de réseau (120) pour valider une utilisation de spectre comprenant :
la réception (208) depuis un noeud de spectre (130) d'une demande pour des informations de validation pour un dispositif radio pour valider le dispositif radio pour utiliser un spectre sans fil commandé par le noeud de spectre ;
la communication (308) au dispositif radio d'un message de demande de dispositif radio, le message de demande de dispositif radio basé au moins en partie sur une clé de dispositif radio associée au dispositif radio ;
la réception (324) depuis le dispositif radio d'un message de somme de contrôle de dispositif radio ;
la comparaison (332) du message de somme de contrôle de dispositif radio à une somme de contrôle de référence de dispositif radio pour valider le dispositif radio ; et
la communication (216) au noeud de spectre (130) d'un message de validation validant le dispositif radio si la somme de contrôle de référence de dispositif radio correspond au message de somme de contrôle de dispositif radio.

13. Dispositif radio (110) pour valider une utilisation de spectre comprenant :
une mémoire stockant des instructions ; et
un ou plusieurs processeurs en communication avec la mémoire, le ou les processeurs opérationnels pour exécuter les instructions pour amener le ou les processeurs à mettre en oeuvre l'un quelconque des procédés 1 à 5.

14. Noeud de réseau (120, 130) pour valider une utilisation de spectre comprenant :
une mémoire stockant des instructions ; et
un ou plusieurs processeurs en communication avec la mémoire, le ou les processeurs opérationnels pour exécuter les instructions pour amener le ou les processeurs à mettre en oeuvre l'un quelconque des procédés 6 à 12.
